(19) **Europäisches Patentamt**
**European Patent Office**
**Office européen des brevets**

(11) **EP 1 128 617 B1**

(12) **EUROPEAN PATENT SPECIFICATION**

(45) Date of publication and mention
of the grant of the patent:
**11.04.2007 Bulletin 2007/15**

(51) Int Cl.:
*H04L 25/02* $^{(2006.01)}$     *H04B 7/005* $^{(2006.01)}$

(21) Application number: **00301555.9**

(22) Date of filing: **28.02.2000**

(54) **Method and receiver for obtaining channel estimated values for equalising digital signals**

Verfahren und Empfänger zur Schätzung von Kanalstossantworten für die Entzerrung digitaler Signale

Procédé et récepteur mettant en oeuvre une estimation de voie pour égaliser des signaux numériques

(84) Designated Contracting States:
**DE**

(43) Date of publication of application:
**29.08.2001 Bulletin 2001/35**

(73) Proprietor: **LUCENT TECHNOLOGIES INC.**
**Murray Hill, New Jersey 07974-0636 (US)**

(72) Inventors:
• **Gerstacker, W.H.**
**90482 Nuremberg (DE)**
• **Meyer, R.**
**90449 Nuremberg (DE)**

• **Obernosterer, F.G.E.**
**91367 Weissenohe (DE)**

(74) Representative: **Williams, David John et al**
**Lucent Technologies EUR-IP UK Ltd**
**Unit 18, Core 3**
**Workzone**
**Innova Business Park**
**Electric Avenue**
**Enfield, EN3 7XB (GB)**

(56) References cited:
**EP-A- 0 966 113**     **WO-A-00/05847**
**US-A- 5 278 871**     **US-A- 5 371 471**

**Description**

The invention relates to a method for channel estimation in a receiver of a digital transmission system, and to a receiver for carrying out the method.

During digital transmission via dispersive channels, for example via a mobile radio channel or via two-wire lines, the transmitted signal is distorted and disturbed by noise. In the case of GSM, for example, the distortions are produced by multi-path propagation and characteristic pulse interference of the applied modulation method. A receiver must therefore be able to carry out special correction or detection algorithms for recovering the transmitted data from the received signal. The optimum method for correcting dispersive channels is Maximum Likelihood Sequence Estimation (MLSE) which can be carried out by means of the Viterbi algorithm. However, in the case of long channel pulse responses and/or non-binary signal alphabets, the Viterbi algorithm can no longer be implemented in practice because of the then very high outlay. Thus, suboptimum methods must be used, for example Reduced-State Sequence Estimation (RSSE) or Decision-Feedback Sequence Estimation (DFSE). It is also conceivable to use Decision-Feedback Equalization (DFE) or linear correction, which although being of lower efficiency than sequence estimation methods also entail less system complexity.

All known correction methods have filter coefficients as free parameters which are to be optimized as a function of the transmission scenario obtaining. Direct setting of these free parameters using an adaptive, recursive method, for example the Least-Mean Square (LMS) algorithm, which is described, for example, by S. Haykin in the article "Adaptive Filter Theory", Prentice -Hall, Upper Saddle River, New Jersey, third edition, 1996, is not possible in the case of a block-based transmission with relatively short blocks such as obtains, for example, in the case of the mobile radio standard GSM. The reason for this is that such methods require too long a convergence time. Instead of this, in such scenarios estimation of the channel pulse response is undertaken with the aid of a training sequence, it being possible to assume that the pulse response is approximately constant inside the training sequence. A substantially smaller sample size is required for this than in the case of direct setting. Starting from the estimated channel pulse response, it is then possible to calculate the required filter coefficients (for the special case of MLSE, the channel estimated values directly represent the desired parameters). In the case of relatively strongly time-variant channels, additional adaptive correction of the calculated coefficients (starting solution) along the block is advantageous.

The efficiency of the downstream correction is strongly influenced by the quality of the channel estimated values.

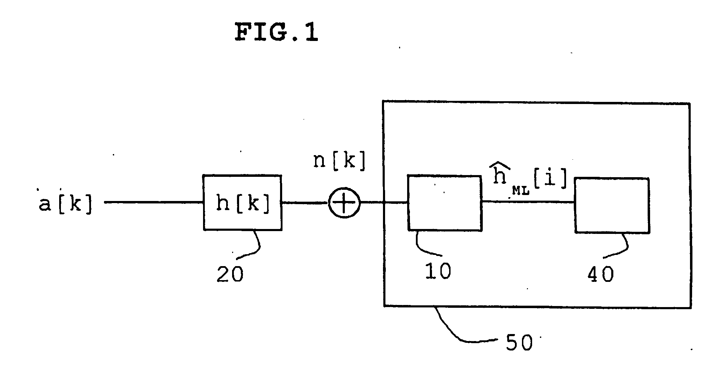

Transmission using pulse amplitude modulation (PAM) via a distorting channel, which produces intersymbol interference (ISI), can be modelled in a time-discrete fashion in accordance with Figure 1. The sampled received signal $r[k]$ is produced as a noise-impaired convolution of the PAM transmitted sequence $a[k]$ with the channel pulse response $h[k]$, whose length is denoted by L, by means of:

$$r[k] = \sum_{\kappa=0}^{L-1} h[\kappa] \; a[k-\kappa] + n[k] \, , \qquad\qquad (1)$$

$n[k]$ representing the time-discrete interference which is assumed to be of Gaussian distribution and white (the latter being given before sampling in the case of the use of a whitened matched filter or a general root Nyquist filter as time-continuous receiver input filter). Depending on the modulation method used, the amplitude coefficients and the channel pulse response are either purely real or complex. For the sake of simplicity, the discrete time $k = -(L-1)$ is assigned to the start of each transmitting block. For the purpose of channel estimation, a training sequence known to the receiver and of length $N$ is transmitted between the instants $k = -(L-1)$ and $k = N-L;$ consequently, the received symbols $r[0]$, $r[1]$, ..., $r[N-L]$ can be used for estimation and are now combined to form a column vector $r$:

$$r = [r[0] \; r[1] \; ... \; r[N-L]]^T \qquad\qquad (2)$$

$((.)^T$ denotes transposition in this case). The first $L$-1 received symbols $r[-(L-1)]$, ..., $r[-1]$ are ignored; since these can still be influenced by undefined transmitted symbols; the knowledge of $L$ required for this purpose at the receiving end can be presupposed. It holds on the basis of equ. (1) that

$$r = Ah + n, \tag{3}$$

where

$$h = [h[0] \; h[1] \; \ldots \; h[L-1]]^T, \tag{4}$$

$$n = [n[0] \; n[1] \; \ldots \; n[N-L]]^T, \tag{5}$$

$$A = \begin{bmatrix} a[0] & a[-1] & \ldots & a[-(L-1)] \\ a[1] & a[0] & \ldots & a[-(L-2)] \\ \vdots & \vdots & \vdots & \vdots \\ a[N-L] & a[N-L-1] & \ldots & a[N-2L+1] \end{bmatrix} \tag{6}$$

Use is frequently made of correlative channel estimation, which is mentioned in DE-C 196 14 543, for example, or of the maximum likelihood (ML)channel estimation related thereto in current mobile radio systems, for example GSM. In the case of ML estimation, the estimated value $\hat{h}_{ML}$ for $h$ is formed in accordance with the criterion

$$\hat{h}_{ML} = \arg\max_{h} p(r|A,h), \tag{7}$$

$p(r/A, h)$ denoting the conditioned probability density of the received vector $r$ for a given matrix $A$ and given vector $h$. It follows from equ. (7) in conjunction with consideration of the Gaussian distribution of the vector $n$ that

$$\hat{h}_{ML} = (A^H \Phi_{nn}^{-1} A)^{-1} A^H \Phi_{nn}^{-1} r, \tag{8}$$

$(\cdot)^H$ representing the Hermitian transpose, and the autocorrelation matrix $\Phi_{nn}$ of the noise being given by

$$\Phi_{nn} = E\{nn^H\} \tag{9}$$

Since
$n[k]$ was assumed to be white, it holds that

$$\Phi_{nn} = \sigma_n^2 E_{N-L+1}, \tag{10}$$

with the noise variant $\sigma_n^2 = E\left\{\left|n[k]\right|^2\right\}$ and the $(N\text{-}L+1) * (N\text{-}L+1)$ unit matrix $\boldsymbol{E}_{N\text{-}L+1}$. The result is therefore, finally, a maximum likelihood channel estimated value of

$$\hat{h}_{ML} = (A^H A)^{-1} A^H r. \tag{11}$$

It is assumed for what follows that there is an optimum training sequence which ensures a best possible efficiency of ML channel estimation. This leads to

$$A^H A = cE_L, \tag{12}$$

the factor c in the case of PSK (Phase Shift Keying) signal constellations ($|a[k]|=1$), as used, for example, in the case of GSM or the development EDGE (Enhanced Data Rates for GSM Evolution) being given by $c = N\text{-}L+1$. This leads to

$$\hat{h}_{ML} = \frac{1}{N-L+1} A^H r. \tag{13}$$

The error variance $E\{|\hat{h}_{ML}[i]\text{-}h[i]|^2\}$ is in this case the same for all positions $i \in \{0,1,...,L\text{-}1\}$ and is

$$E\left\{\left|\hat{h}_{ML}[i] - h[i]\right|^2\right\} = \sigma_n^2 /(N-L+1). \tag{14}$$

The quality of the channel estimation can be raised by comparison with ML estimation when there is advance knowledge of the channel. Reference may be made in this connection, for example, to the article "Optimal Parametric Feedforward Estimation of Frequency-Selective Fading Radio Channels" IEEE Trans. On Commun., COM-42:1639-1650, February, March, April, by S.A. Fechtel and H. Meyr. In this case, a maximum, a-posteriori estimated value for $\boldsymbol{h}$ can be calculated, being given by

$$\hat{h}_{MAP} = \arg\max_{\boldsymbol{h}} p(\boldsymbol{h}\,|\,A,r) \tag{15}$$

$$= \arg\max_{\boldsymbol{h}} \left\{p(r\,|\,\boldsymbol{h},A)p(\boldsymbol{h})\right\} \tag{16}$$

with the conditioned density function $p(\boldsymbol{h}|A,r)$ of $\boldsymbol{h}$ with knowledge of $\boldsymbol{A}$ and $\boldsymbol{r}$ and of the density $p(\boldsymbol{h})$ of $\boldsymbol{h}$, by means of which the advance knowledge of the channel appears in equ. (16). In mobile radio, a complex Gaussian distribution without a mean can be assumed for $\boldsymbol{h}$, mostly to a good approximation. This also leads to the estimated value of

$$\hat{h}_{MAP} = (A^H \Phi_{nn}^{-1} A + \Phi_{hh}^{-1})^{-1} A^H \Phi_{nn}^{-1} r, \qquad (17)$$

$\Phi_{hh}$ representing the autocorrelation matrix of $h$ and being given by:

$$\Phi_{hh} = E\{hh^H\} \qquad (18)$$

In the case of uncorrelated channel coefficients, it holds that

$$\Phi_{hh} = \text{diag}(\sigma_0^2, \sigma_1^2, ..., \sigma_{L-1}^2), \qquad (19)$$

diag($x$, $y$,...) denoting a diagonal matrix with the diagonal elements x, y,..., and $\sigma_i^2$ being the variance of the ith channel coefficient, where $i \in \{0,1,...., L - 1\}$. The assumption of lack of correlation is frequently justified, since taking account of correlations between different coefficients mostly results in only slight gains in the channel estimation. Given the occurrence of white noise and an optimum PSK training sequence, equ. (17) can be transformed, taking account of equ. (10), equ. (19) and equ. (13), into

$$\hat{h}_{MAP} = \text{diag}\left(1 + \frac{\sigma_n^2}{(N-L+1)\sigma_0^2}, ..., 1 + \frac{\sigma_n^2}{(N-L+1)\sigma_{L-1}^2}\right)^{-1} \underbrace{\frac{1}{N-L+1} A^H r}_{\hat{h}_{ML}} . \qquad (20)$$

This means that after ML channel estimation a weighting of the ith obtained channel estimated value is to be undertaken using the factor

$$d[i] = \frac{\sigma_i^2}{\sigma_i^2 + \sigma_n^2 /(N - L + 1)} . \qquad (21)$$

In the case of channel coefficients with a Gaussian distribution, the MAP channel estimation can also be interpreted as channel estimation with a minimum squared error (Minimum Mean-Squared Error, MMSE).
The error variance of the ith coefficient is now

$$E\left\{\left|\hat{h}_{MAP}(i) - h[i]\right|^2\right\} = \frac{\sigma_i^2 \dfrac{\sigma_n^2}{N-L+1}}{\sigma_i^2 + \dfrac{\sigma_n^2}{N-L+1}} \qquad (22)$$

as follows according to intermediate calculation, and is thus lower by a factor of d[i] than in the case of an ML channel estimation, compare equ. (14).

In addition to knowledge of the ML estimated values $\hat{h}_{ML}[i]$, determining the weighting factors $d[i]$, which are used to determine the MAP estimated values $\hat{h}_{MAP}[i]$, also requires knowledge of the noise variance $\sigma_n^2$, which can be estimated using ML channel estimation via simulation of the received user signal, and likewise a variance of the corresponding channel coefficient $\sigma_i^2$ which is, in general, not accessible to the receiver. The coefficient variances can therefore not be estimated as a rule by averaging, since in mobile radio systems frequent use is made of frequency hopping, or there is discontinuous transmission. The result of both is that different user blocks are generally subject to different channel statistics.

In conventional methods, the mean-squared error of ML channel estimation is improved without advance knowledge of the channel by setting to zero in a hard fashion in a postprocessing unit estimated channel coefficients which fall below a threshold dependent on the maximum value $\max_i \hat{h}_{ML}[i]$ or on the estimated interference variance. Such a method is described, for example, in the article "Ein Konzept zur Kanalschätzung, Interferenzeliminierung und Leistungsregelung für CDMA-Mobilfunksysteme" ["A concept for channel estimation, interference elimination and output regulation for CDMA mobile radio systems"], which appeared in the ITG Specialist Conference 1994, pages 77-88, by B. Steiner et al. Use was made for this purpose of a "hard" characteristic in accordance with the equation

$$f(\hat{h}_{ML}[i]) \;=\; \frac{1}{2}\left(1 + \text{sign}\left(\left|\hat{h}_{ML}[i]\right|^2 - C\right)\right), \qquad\qquad (23)$$

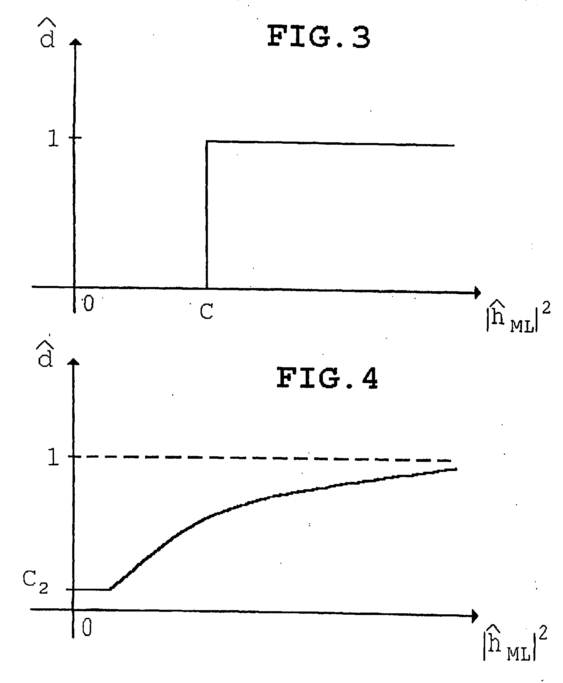

which is represented in Figure 3. In accordance with [lacuna], it is possible herein to set $C = (\max_i |\hat{h}_{ML}[i]|^2)/4$, as taught in WO 92/11708. Weighting of the channel estimated values by means of such a "hard" characteristic does lead to improved channel estimated values, but the quality of the channel estimated values is impaired because in the case of small signal-to-noise ratios $\sigma_i^2 / \sigma_n^2$ gains have to be acquired at the expense of relatively large losses in the case of large signal-to-noise ratios.

It is therefore the object of the invention to provide a method and a receiver with the aid of which it is possible for the efficiency of the optimum MMSE channel estimation to be approximately achieved.

It is known from International (P.C.T.) Published Application WO 00/05847 to provide a method for channel estimation in a receiver of a digital transmission system, having the following steps:

a) obtaining channel estimated values $(\hat{h}_{ML}[i],\hat{h}_{COR}[i])$ for the pulse response of a transmission channel from a received corrupted data signal;

b) estimating the noise variance $(\hat{\sigma}_n^2)$ in the receiver; and

c) weighting the obtained channel estimated values $(\hat{h}_{ML}[i],\hat{h}_{COR}[i])$ with the aid of factors $(\hat{d}[i])$ which have a continuous functional relationship with the obtained channel estimated values $(\hat{h}_{ML}[i],\hat{h}_{COR}[i])$ which depends on the estimated noise variance $(\hat{\sigma}_n^2)$.

The present invention is characterised over the disclosure of WO 00/05847 in that the continuous functional relationship is determined by the equation

$$\hat{d}[i] = \max\left(\frac{\left|\hat{h}_{ML}[i]\right|^r - C_1\,\hat{\sigma}_n^2/(N-L+1)}{\left|\hat{h}_{ML}[i]\right|^r}, C_2\right),$$

$\hat{d}[i]$ being the weighting factor for the ith channel estimated value, $\hat{h}_{ML}[i]$ being the ith maximum likelihood channel

estimated value, $\hat{\sigma}_n^2$ being the estimated or previously known noise variance, N being the length of a training sequence, L being the length of the time-discrete pulse response, and $C_2$ being a selectable threshold value which is in the range from 0 to 1.

The core idea of the invention is to be seen in carrying out postprocessing, which is improved by comparison with the prior art, of obtained channel estimated values which are required, for example, for channel correction in the case of trellis-based estimation methods.

Channel estimated values are obtained in the receiver for the pulse response of a transmission channel from a received corrupted data signal, and thereafter the noise variance is estimated. Subsequently, the obtained channel estimated values are weighted with the aid of factors which have a continuous functional relationship with the obtained channel estimated values which depends on the noise variance. In other words, for the purpose of postprocessing the channel estimated values, the method according to the invention uses a "soft" characteristic by contrast with the prior art, which uses a "hard" characteristic.

Only knowledge on the channel estimated values and the noise variance is required to determine the weighting factors. Advance knowledge on the channel pulse response in the form of coefficient variances which need to be known in the case of optimum MMSE channel estimation is not required.

Advantageous developments are the subject-matter of the subclaims.

The continuous functional relationship between the weighing factors and the obtained channel estimated values is defined by the rule $\hat{d}[i] = f(\hat{h}[i]; \hat{\sigma}_n^2)$, $\hat{d}[i]$ being the weighting factor for the ith channel estimated value, $\hat{h}[i]$ being the ith channel estimated value, and $\sigma_n^2$ being the noise variance.

In the case of an expedient approach to a solution, the continuously functional relationship is determined by the equation

$$\hat{d}[i] = \max\left( \frac{\left| \hat{h}_{ML}[i] \right|^r - C_1 \hat{\sigma}_n^2 / (N - L + 1)}{\left| \hat{h}_{ML}[i] \right|^r}, C_2 \right).$$

$\hat{d}[i]$ being the weighting factor for the ith channel estimated value, $\hat{h}_{ML}[i]$ being the ith maximum likelihood channel estimated value, $\hat{\sigma}_n^2$ being the noise variance, N being the length of a training sequence, L being the length of the time-discrete pulse response, r being a number in the range from, for example, 0 to 2, $C_1$ being a number in the range from, for example, 0.5 to 1.5, and $C_2$ being a number in the range from 0 to 1.

The quality of the channel estimated values can be further improved if at least some of the weighting factors have various continuous functional relationships with the corresponding obtained channel estimated values.

If the channel estimated values are complex, different weighting factors can be used for the real and imaginary parts of each channel estimated value.

The weighted channel estimated values are subsequently fed to a correction or detection algorithm, in order to obtain the user data contained in the received corrupted signal.

The channel estimated values are obtained in a way known per se by means of a correlative or maximum likelihood estimation.

The technical problem specified above is likewise solved by means of the features of Claim 6.

For this purpose, the receiver has a device for estimating values for the pulse response of a transmission channel from a received corrupted data signal, and a device for estimating the noise variance. Furthermore, connected downstream of the estimating device is a device which weights the channel estimated values with the aid of factors which have a continuous functional relationship with the obtained channel estimated values. In this case, the functional relationship depends on the noise variance. A correction or detection device serves to correct or detect the received corrupted data signal by means of the weighted channel estimated values.

The invention is explained in more detail below with the aid of an exemplary embodiment in conjunction with the attached drawings, wherein:

Fig. 1     shows a block diagram of a digital transmission link with a receiver, without postprocessing,

Fig. 2    shows a block diagram of a digital transmission link with a receiver according to the invention,
Fig. 3    shows a hard characteristic for a postprocessing device in accordance with the prior art, and
Fig. 4    shows a soft characteristic for a postprocessing device according to the invention.

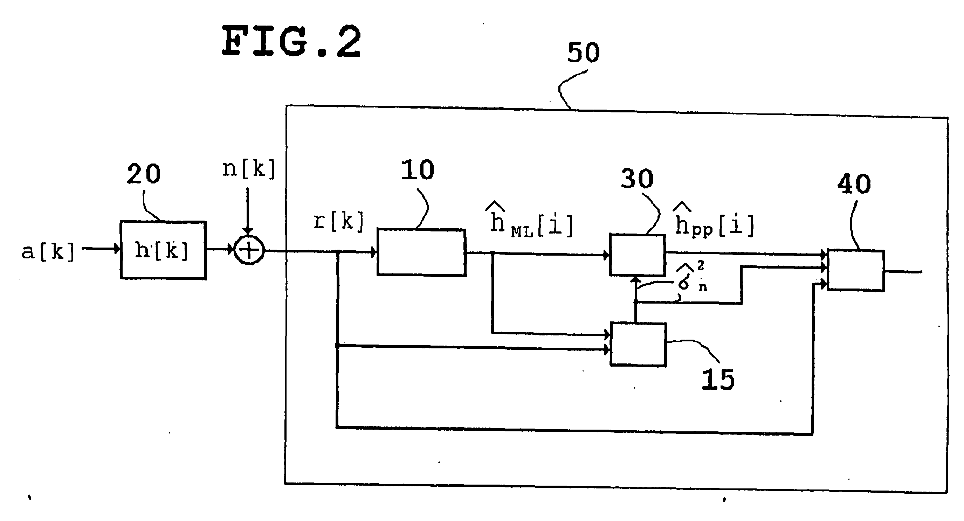

Figure 2 shows a digital transmission link having a transmission channel 20 disturbed by noise $n[k]$ and with a time-discrete pulse response $h[k]$ and a receiver 50 according to the invention at whose input received symbols $r[k]$ arrive. The input of the receiver 50 serves as input of an ML channel estimating device 10, at whose output there is present the estimated value $\hat{h}_{ML}[i]$ which is fed to the input of a postprocessing device 30. The input of the receiver 50 and the output of the channel estimating device 10 are connected to the inputs of a noise variance estimating device 15 which supplies an estimated noise variance $\hat{\sigma}_n^2$ at the output. The input signal of the receiver 50 and the output signal $\hat{h}_{pp}[i]$ of the postprocessing device 30, and the output signal of the noise variance estimating device 15 are applied to a correction or detection device 40.

The mode of operation of the receiver 50 and, in particular, the mode of operation of the postprocessing device 30 are explained in more detail below.

The ML channel estimated values present at the output of the ML channel estimating device are postprocessed in the postprocessing device 30, which has a soft characteristic. The postprocessed channel estimated values are then fed to the correction or detection device 40.

After the ML channel estimation in the ML channel estimating device 10, a simulation of the undisturbed received signal in the noise variance estimating device 15 is used, for example, to determine for the noise variance an estimated value $\hat{\sigma}_n^2$ from which it is possible to determine directly an estimated value for the error variance of the ML channel estimation $\hat{\sigma}_n^2/(N-L+1)$. Subsequently, estimated values are calculated for the weighting factors $d[i]$, occurring in the MMSE solution, for the ML channel estimated values, compare equ. (21).

$$\hat{d}[i] = \frac{\left|\hat{h}_{ML}[i]\right|^r - C_1\hat{\sigma}_n^2/(N-L+1)}{\left|\hat{h}_{ML}[i]\right|^r}. \tag{24}$$

is selected as first approach for this, it being possible to interpret the numerator on the right-hand side of equ. (24) as estimated value for $\sigma_i^2$, and to interpret the denominator as estimated value for $\sigma_i^2 + \sigma_n^2/(N-L+1)$ from equ. (21). The factor r in equ. (24) is a number in the range from, for example, 0 to 2, preferably in the range from 1.4 to 2, and $C_1$ is a number in the range from, for example, 0.5 to 1.5. Subsequently, the postprocessing device 30 outputs as the result of postprocessing of the ML channel estimated values the value of

$$\hat{h}_{pp}[i] = \hat{d}[i] \bullet \hat{h}_{ML}[i]. \tag{25}$$

However, it is also possible when using equation (24) to encounter negative weighting factors, and this appears to be unfavourable since said factors are generally positive in the case of the MMSE solution. In order to avoid negative weighting factors, it is proposed to set the weighting factors to a freely selectable threshold value $C_2$ when the value of equ. (24) is less than $C_2$, $C_2$ being a number in the range from 0 to 1. This leads to the expression:

$$\hat{d}[i] = \max\left(\frac{\left|\hat{h}_{ML}[i]\right|^r - C_1\hat{\sigma}_n^2/(N-L+1)}{\left|\hat{h}_{ML}[i]\right|^r}, C_2\right). \tag{26}$$

In the case of amplitude coefficients with a Gaussian distribution and interference with a Gaussian distribution it is possible given this selection of the weighting factors to achieve substantially smaller squared errors over a wide range of the signal-to-noise ratio $\sigma_i^2 / \sigma_n^2$ than in the case of the ML channel estimation.

The decisive principle of the invention is that the weighting factors are calculated, for example, as a function of the ML channel estimated values, which leads to the general representation of

$$\hat{d}[i] = f(\hat{h}_{ML}[i]; \hat{\sigma}_n^2),$$
(27)

the function $f$ depending both on $\hat{\sigma}_n^2$ and on the individual coefficients $\hat{h}_{ML}[i]$, and having a "soft" characteristic, as represented in Figure 4. In general, there is a soft transition from $C_2$ to 1. Limiting cases of $C_2 = 0$ and/or $f(\hat{h}_{ML}[i];\cdot)=1$ are permitted in principle; even negative functional values are not excluded.

The previously customary "hard" characteristic

$$f(\hat{h}_{ML}[i]) = \frac{1}{2}\left(1 + \text{sign}\left(\left|\hat{h}_{ML}[i]\right|^2 - C\right)\right),$$
(23)

represented in Figure 3, turns out, by contrast, to be plainly more unfavourable than suitable soft characteristics, since gains in conjunction with low signal-to-noise ratios $\sigma_i^2 / \sigma_n^2$ must be acquired at the expense of relatively high losses in the case of high signal-to-noise ratios.

The method implemented in the postprocessing device 30 can be applied not only to ML channel estimations, but also to general correlative channel estimation, in which the estimated values

$$\hat{h}_{COR}[i] = h[i] + \tilde{n}[i]$$
(28)

result, it being possible to calculate the variances of the interference $\tilde{n}[i]$, denoted by $\sigma_{\tilde{n},i}^2$, directly in the case of a given training sequence and noise variance $\sigma_n^2$. The previous results for ML channel estimation can therefore also be applied here; for this purpose, it is necessary in each case to replace $\hat{\sigma}_n^2 / (N - L + 1)$ by $\hat{\sigma}_{\tilde{n},i}^2$.

The method permits the postprocessing of channel estimated values which are determined for a correction method carried out subsequently, the quality of the original estimated values found with correlative or ML channel estimation being substantially improved, with the result that it is possible for the efficiency of the optimum MMSE channel estimation to be approximately achieved. This is attended by an improvement in the quality of the correction.

## Claims

1.  Method for channel estimation in a receiver of a digital transmission system, having the following steps:

    a) obtaining channel estimated values ($\hat{h}_{ML}[i]$, $\hat{h}_{COR}[i]$) for the pulse response of a transmission channel from a received corrupted data signal;

b) estimating the noise variance $(\hat{\sigma}_n^2)$ in the receiver; and

c) weighting the obtained channel estimated values ($\hat{h}_{ML}[i]$, $\hat{h}_{COR}[i]$) with the aid of factors ($\hat{d}[i]$) which have a continuous functional relationship with the obtained channel estimated values ($\hat{h}_{ML}[i]$, $\hat{h}_{COR}[i]$) which depends on the estimated noise variance $(\hat{\sigma}_n^2)$, **characterized in that** the continuous functional relationship is determined by the equation

$$\hat{d}[i] = \max\left(\frac{\left|\hat{h}_{ML}[i]\right|^r - C_1\,\hat{\sigma}_n^2\,/(N-L+1)}{\left|\hat{h}_{ML}[i]\right|^r}, C_2\right),$$

$\hat{d}[i]$ being the weighting factor for the ith channel estimated value, $\hat{h}_{ML}[i]$ being the ith maximum likelihood channel estimated value, $\hat{\sigma}_n^2$ being the estimated or previously known noise variance, N being the length of a training sequence, L being the length of the time-discrete pulse response, and $C_2$ being a selectable threshold value which is in the range from 0 to 1.

2. Method according to Claim 1, **characterized in that** r is in the range from 0 to 2 and $C_1$ is in the range from 0.5 to 1.5.

3. Method according to Claim 1 or 2, **characterized in that** the channel estimated values are complex and different weighting factors ($\hat{d}[i]$) are used for the real and imaginary parts of a channel estimated value ($\hat{h}_{ML}[i]$, $\hat{h}_{COR}[i]$).

4. Method according to one of Claims 1 to 3, **characterized in that** the weighted channel estimation values are fed to a detection algorithm.

5. Method according to one of Claims 1 to 4, **characterized in that** the channel estimated values ($\hat{h}_{ML}[i]$, $\hat{h}_{COR}[i]$) are obtained by means of correlative or maximum likelihood estimation.

6. Receiver in a digital transmission system, comprising:

a device (10) for estimating values ($\hat{h}_{ML}[i]$, $\hat{h}_{COR}[i]$) for the pulse response of a transmission channel (20) from a received corrupted data signal;

a device (15) for estimating the noise variance $(\hat{\sigma}_n^2)$,

a device (30), connected downstream of the pulse response values estimating device (10), for weighting the channel estimated values ($\hat{h}_{ML}[i]$, $\hat{h}_{COR}[i]$) with the aid of factors ($\hat{d}[i]$) which have a continuous functional relationship with the obtained channel estimated values which depends on the estimated noise variance $(\hat{\sigma}_n^2)$, and

a device for detecting (40) the received corrupted data signal by means of the weighted channel estimated values,

**characterized in that** the continuous functional relationship is determined by the equation

$$\hat{d}[i] = \max\left(\frac{\left|\hat{h}_{ML}[i]\right|^r - C_1\,\hat{\sigma}_n^2\,/(N-L+1)}{\left|\hat{h}_{ML}[i]\right|^r}, C_2\right),$$

$\hat{d}[i]$ being the weighting factor for the ith channel estimated value, $\hat{h}_{ML}[i]$ being the ith maximum likelihood channel

estimated value, $\hat{\sigma}_n^2$ being the estimated or previously known noise variance, N being the length of a training sequence, L being the length of the time-discrete pulse response, and $C_2$ being a selectable threshold value which is in the range from 0 to 1.

**Patentansprüche**

1. Verfahren zur Kanalschätzung in einem Empfänger eines digitalen Übertragungssystems, mit den folgenden Schritten:

   a) Erhalten von Kanalstoßantworten ($\hat{h}_{ML}[i],\hat{h}_{COR}[i]$) für die Impulsantwort eines Übertragungskanals aus einem empfangenen beschädigten Datensignal;

   b) Schätzen der Rauschvarianz ($\hat{\sigma}_n^2$) in dem Empfänger; und

   c) Gewichten der erhaltenen Kanalstoßantworten ($\hat{h}_{ML}[i],\hat{h}_{COR}[i]$)mit Hilfe von Faktoren ($\hat{d}[i]$), die eine kontinuierliche Funktionsbeziehung zu den erhaltenen Kanalstoßantworten ($\hat{h}_{ML}[i],\hat{h}_{COR}[i]$) haben, die von der geschätzten Rauschvarianz ($\hat{\sigma}_n^2$) abhängt, **dadurch gekennzeichnet, dass** die kontinuierliche Funktionsbeziehung durch folgende Gleichung bestimmt wird:

$$\hat{d}[i] = \max\left( \frac{\left| \hat{h}_{ML}[i] \right|^r - C_1\,\hat{\sigma}_n^2\,/(N-L+1)}{\left| \hat{h}_{ML}[i] \right|^r}, C_2 \right),$$

   wobei: $\hat{d}[i]$ der Gewichtungsfaktor für die i-te Kanalstoßantwort ist, $\hat{h}_{ML}[i]$ die i-te Kanalstoßantwort mit maximaler Wahrscheinlichkeit ist, $\hat{\sigma}_n^2$ die geschätzte oder vorher bekannte Rauschvarianz ist, N die Länge einer Lernsequenz ist, L die Länge der zeitdiskreten Impulsantwort ist und $C_2$ ein wählbarer Schwellenwert ist, der im Bereich von 0 bis 1 ' liegt.

2. Verfahren nach Anspruch 1, **dadurch gekennzeichnet, dass** r im Bereich von 0 bis 2 liegt und $C_1$ im Bereich von 0,5 bis 1,5 liegt.

3. Verfahren nach Anspruch 1 oder 2, **dadurch gekennzeichnet, dass** die Kanalstoßantworten komplex sind und verschiedene Gewichtungsfaktoren ($\hat{d}[i]$) für die realen und imaginären Teile einer Kanalstoßantwort ($\hat{h}_{ML}[i],\hat{h}_{COR}[i]$) verwendet werden.

4. Verfahren nach einem der Ansprüche 1 bis 3, **dadurch gekennzeichnet, dass** die gewichteten Kanalstoßantworten in einen Detektionsalgorithmus eingespeist werden.

5. Verfahren nach einem der Ansprüche 1 bis 4, **dadurch gekennzeichnet, dass** die Kanalstoßantworten ($\hat{h}_{ML}[i], \hat{h}_{COR}[i]$) mittels korrelativer oder Maximalwahrscheinlichkeitsschätzung erhalten werden.

6. Empfänger in einem digitalen Übertragungssystem, der Folgendes aufweist:

   eine Vorrichtung (10) zum Schätzen von Werten ($\hat{h}_{ML}[i],\hat{h}_{COR}[i]$) für die Impulsantwort eines Übertragungskanals (20) aus einem empfangenen beschädigten Datensignal;

   eine Vorrichtung (15) zum Schätzen der Rauschvarianz ($\hat{\sigma}_n^2$);

   eine Vorrichtung (30), die stromabwärts der Vorrichtung (10) zum Schätzen von Impulsantwortwerten angeschlossen ist, zum Gewichten der Kanalstoßantworten ($\hat{h}_{ML}[i],\hat{h}_{COR}[i]$) mit Hilfe von Faktoren ($\hat{d}[i]$), die eine kontinuierliche Funktionsbeziehung zu den erhaltenen Kanalstoßantworten haben, die von der geschätzten

Rauschvarianz $(\hat{\sigma}_n^2)$ abhängt, und

eine Vorrichtung zum Detektieren (40) des empfangenen beschädigten Datensignals mittels der gewichteten Kanalstoßantworten,

**dadurch gekennzeichnet, dass** die kontinuierliche Funktionsbeziehung durch folgende Gleichung bestimmt wird:

$$\hat{d}[i] = \max\left(\frac{\left|\hat{h}_{ML}[i]\right|^r - C_l\,\hat{\sigma}_n^2\,/(N-L+l)}{\left|\hat{h}_{ML}[i]\right|^r}, C_2\right),$$

wobei: $\hat{d}[i]$ der Gewichtungsfaktor für die i-te Kanalstoßantwort ist, $\hat{h}_{ML}[i]$ die i-te Kanalstoßantwort mit maximaler Wahrscheinlichkeit ist, $\hat{\sigma}_n^2$ die geschätzte oder vorher bekannte Rauschvarianz ist, N die Länge einer Lernsequenz ist, L die Länge der zeitdiskreten Impulsantwort ist und $C_2$ ein wählbarer Schwellenwert ist, der im Bereich von 0 bis 1 liegt.

**Revendications**

1.  Procédé pour l'estimation de canal dans un récepteur d'un système de transmission numérique, ayant les étapes suivantes :

    a) obtention de valeurs estimées de canal ($\hat{h}_{ML}[i],\hat{h}_{COR}[i]$) pour la réponse impulsionnelle d'un canal de transmission à partir d'un signal de données altérées reçu ;

    b) estimation de la variance de bruit $(\hat{\sigma}_n^2)$ dans le récepteur ; et

    c) pondération des valeurs estimées de canal obtenues ($\hat{h}_{ML}[i],\hat{h}_{COR}[i]$) avec l'aide de facteurs ($\hat{d}[i]$) qui ont une relation fonctionnelle continue avec les valeurs estimées de canal obtenues ($\hat{h}_{ML}[i],\hat{h}_{COR}[i]$) qui dépend de la variance de bruit estimée $(\hat{\sigma}_n^2)$, **caractérisé en ce que** la relation fonctionnelle continue est déterminée par l'équation

$$\hat{d}[i] = \max\left(\frac{\left|\hat{h}_{ML}[i]\right|^r - C_l\,\hat{\sigma}_n^2\,/(N-L+l)}{\left|\hat{h}_{ML}[i]\right|^r}, C_2\right),$$

    $\hat{d}[i]$ étant le facteur de pondération pour la ième valeur estimée de canal, $\hat{h}_{ML}[i]$ étant la ième valeur estimée de canal de vraisemblance maximale, $\hat{\sigma}_n^2$ étant la variance de bruit précédemment connue ou estimée, N étant la longueur d'une séquence d'apprentissage, L étant la longueur de la réponse impulsionnelle discrète dans le temps et $C_2$ étant une valeur de seuil sélectionnable qui est dans la tranche de 0 à 1.

2.  Procédé selon la revendication 1, **caractérisé en ce que** r est dans la tranche de 0 à 2 et $C_1$ est dans la tranche de 0,5 à 1,5.

3.  Procédé selon la revendication 1 ou 2, **caractérisé en ce que** les valeurs estimées de canal sont complexes et des facteurs de pondération différents ($\hat{d}[i]$) sont utilisés pour les parties réelle et imaginaire d'une valeur estimée de canal ($\hat{h}_{ML}[i],\hat{h}_{COR}[i]$)

**4.** Procédé selon l'une des revendications 1 à 3, **caractérisé en ce que** les valeurs d'estimation de canal pondérées sont communiquées à un algorithme de détection.

**5.** Procédé selon l'une des revendications 1 à 4, **caractérisé en ce que** les valeurs d'estimation de canal ($\hat{h}_{ML}[i], \hat{h}_{COR}[i]$)sont obtenues au moyen d'une estimation de vraisemblance maximale ou corrélative.

**6.** Récepteur dans un système de transmission numérique, comprenant :

un dispositif (10) d'estimation des valeurs ($\hat{h}_{ML}[i], \hat{h}_{COR}[i]$) pour la réponse impulsionnelle d'un canal de transmission (20) à partir d'un signal de données altérées reçu ;
un dispositif (15) d'estimation de la variance de

bruit $(\hat{\sigma}_n^2)$,

un dispositif (30), connecté en aval du dispositif d'estimation de valeurs de réponses impulsionnelles (10), pour la pondération des valeurs estimées de canal ($\hat{h}_{ML}[i], \hat{h}_{COR}[i]$) avec l'aide
de facteurs ($\hat{d}[i]$) qui ont une relation fonctionnelle continue avec les valeurs estimées de canal obtenues qui dépend de la variance de

bruit estimée $(\hat{\sigma}_n^2)$, et

un dispositif de détection (40) du signal de données altérées reçues au moyen des valeurs estimées de canal pondérées,

**caractérisé en ce que** la relation fonctionnelle continue est déterminée par l'équation

$$\hat{d}[i] = \max\left(\frac{\left|\hat{h}_{ML}[i]\right|^r - C_1\,\hat{\sigma}_n^2/(N-L+1)}{\left|\hat{h}_{ML}[i]\right|^r}, C_2\right),$$

$\hat{d}[i]$ étant le facteur de pondération pour la ième valeur estimée de canal, $\hat{h}_{ML}[i]$ étant la ième valeur estimée de canal de vraisemblance maximale, $\hat{\sigma}_n^2$ étant la variance de bruit précédemment connue ou estimée, N étant la longueur d'une séquence d'apprentissage, L étant la longueur de la réponse impulsionnelle discrète dans le temps et $C_2$ étant une valeur de seuil sélectionnable qui est dans la tranche de 0 à 1.

FIG.1

# FIG.2

FIG.3

FIG.4

EP 1 128 617 B1